# EUROPÄISCHE PATENTSCHRIFT

(11) **EP 3 618 976 B1**
(45) Veröffentlichungstag und Bekanntmachung des Hinweises auf die Patenterteilung: **01.09.2021**
(21) Anmeldenummer: 18722528.9
(22) Anmeldetag: 04.05.2018
(51) Int. Cl.: B07C 5/36, B07C 5/12

(54) **VORRICHTUNG UND VERFAHREN ZUM SELEKTIEREN VON MIT HOHER GESCHWINDIGKEIT BEWEGTEN GEBINDEN**
DEVICE AND METHOD FOR SELECTING PACKAGES MOVING AT HIGH SPEED
DISPOSITIF ET PROCÉDÉ DE SÉLECTION DE RÉCIPIENTS QUI SONT DÉPLACÉS À HAUTE VITESSE

(30) Priorität: 04.05.2017 DE 102017004358
(43) Veröffentlichungstag der Anmeldung: 11.03.2020
(73) Patentinhaber: QUISS Qualitäts-Inspektionssysteme und Service GmbH, 82178 Puchheim (DE)
(72) Erfinder: WELKER, Stefan, 66625 Nohfelden (DE); GRUBER, Bernhard, 82131 Stockdorf (DE)
(74) Vertreter: Kehl, Ascherl, Liebhoff & Ettmayr Patentanwälte Partnerschaft mbB
(86) Internationale Anmeldenummer: PCT/EP2018/061586
(87) Internationale Veröffentlichungsnummer: WO 2018/202886

(56) Entgegenhaltungen:
- DE-A1-102008 051 919
- DE-U1- 29 716 459

## Beschreibung

Die vorliegende Erfindung bezieht sich gemäß Anspruch 1 auf eine Vorrichtung zum Sortieren von Gebinden und gemäß 10 auf ein Verfahren zum Sortieren von Gebinden.

Die Sortierung von Gebinden findet in verschiedenen Branchen statt und kann je Gebindeart unterschiedlichen Zwängen unterliegen. Im Rahmen der vorliegenden Erfindung werden Gebinde bevorzugt als Getränkebehälter, wie Dosen oder Flaschen, insbesondere aus Glas oder Kunststoff, verstanden. Somit kann ein Gebinde aus genau einem solchen Getränkebehälter bestehen.

Es ist aus der Fertigung und Abfüllung von Dosen bekannt, dass Dosen zur Aufnahme verschiedener Getränke auf demselben Förderband und zur selben Zeit gefördert werden. Somit kann eine Reihe unterschiedlich gestalteter Dosen zum Aufnehmen unterschiedlicher Getränke transportiert werden. Erfindungsgemäß können jedoch anstelle von nur genau einem Förderband mehrere Förderbänder vorgesehen sein, wobei ein Förderband dem Haupttransportpfad folgt und das andere Förderband dem Nebentransportpfad folgt. Somit können die Gebinde durch die Ausrückmittel auch von einem ersten Förderband auf ein zweites Förderband verschoben bzw. umpositioniert werden.

Beim Aufspalten des Dosenstroms in sortenreine Dosenströme treten jedoch oft Probleme auf, die den Gesamtprozess der Dosenherstellung beeinflussen. Da viele hundert Millionen Getränkedosen jeden Tag hergestellt werden, können bereits kleinste Prozessbeeinträchtigungen signifikante Auswirkungen haben.

Aus dem Stand der Technik ist die Druckschrift DE 10 2008 051919 A1 bekannt. Die Druckschrift DE 10 2008 051919 A1 offenbart eine Vorrichtung zum Sortieren von Gegenständen, insbesondere von Flaschen, unterschiedlichen Typs, wobei die Vorrichtung aufweist: Wenigstens eine Zuführvorrichtung zum Zuführen eines unsortierten Zufuhrstroms der zu sortierenden Gegenstände, wenigstens einer Separiereinrichtung zum Separieren der zu sortierenden Gegenstände voneinander nach Maßgabe ihres Typs, und wenigstens eine Abführeinrichtung zum Abführen wenigstens eines Abfuhrstroms sortierter Gegenstände, wobei die Separiereinrichtung wenigstens eine umlaufende Aufnahme aufweist, die einen Gegenstand aus dem unsortierten Strom der zu sortierenden Gegenstände in einer Aufnahmerichtung aufnimmt, während ihrer Umlaufbewegung hält und nach Maßgabe seines Typs an den diesem zugeordneten Abführstrom abgibt, wobei die wenigstens eine Aufnahme mit Druckluft beschickbar ist, die über wenigstens eine der Aufnahme zugeordnete Austrittsöffnung austritt, wobei die wenigstens eine Austrittsöffnung in der Aufnahme derart angeordnet und dimensioniert ist, dass der aufzunehmende Gegenstand durch den sich ergebenden Druckluftstrom bis zur Abgabe an die Abführeinrichtung in der Aufnahme gehalten ist.

Weiterhin ist aus dem Stand der Technik die Druckschrift DE 297 16 459 U1 bekannt. Die Druckschrift DE 297 16 459 U1 offenbart eine Vorrichtung zum Ausleiten von Gegenständen, die auf einem Transporteur transportiert werden, mit einem oder mehreren Schiebesegmenten, die eine Strecke mit dem Transporteur synchron mitbewegbar sind und quer zur Transportrichtung einzeln aus- und einfahrbar sind, um einen Gegenstand von dem Transporteur zu schieben, wobei das oder die Schiebesegmente in einem Schlitten in Transportrichtung nebeneinander einzeln ein- und ausfahrbar geführt sind und wobei der Schlitten in Transportrichtung hin- und herbewegbar ist.

Es ist somit die Aufgabe der vorliegenden Erfindung eine Vorrichtung und ein Verfahren zum Selektieren von sehr schnell bewegten Gebinden bereitzustellen, wobei die Vorrichtung und das Verfahren so gestaltet sein sollen, dass der Gesamtprozess der jeweiligen Anlage möglichst wenige beeinflusst wird.

Die zuvor genannte Aufgabe wird erfindungsgemäß durch eine Vorrichtung zum Sortieren von Gebinden, insbesondere Getränkebehältern, gemäß Anspruch 1 gelöst. Die erfindungsgemäße Vorrichtung umfasst dabei bevorzugt mindestens ein Förderband zum Transportieren von einer Vielzahl an Gebindeeinheiten, eine Identifikationseinrichtung zum Identifizieren eines Dekors auf jeder auf dem Förderband geförderten Gebindeeinheit, wobei durch die Identifikationseinrichtung Selektierdaten in Abhängigkeit von den jeweils auf einem konkret erfassten Gebinde vorhandenen Dekors erzeugbar sind, eine Selektiereinrichtung zum Umpositionieren individueller Gebindeeinheiten auf dem Förderband in Abhängigkeit von dem jeweils identifizierten Dekor, wobei die Selektiereinrichtung eine Endlosbahn ausbildet und Ausrückmittel zum Verschieben der identifizierten Gebindeeinheiten aufweist, wobei sich die Endlosbahn in einem Selektierbereich entlang des Förderbandes erstreckt, wobei die individuellen Ausrückmittel in dem Selektierbereich mittels einer Transporteinrichtung auf dieselbe Geschwindigkeit wie das Förderband beschleunigbar sind und dabei eine konkrete und zuvor identifizierte Gebindeeinheit benachbart, wobei die Ansteuerung der Transporteinheit in Abhängigkeit von den Selektierdaten erfolgt, wobei das jeweilige Ausrückmittel zum Verschieben der benachbarten Gebindeeinheit in einer zur Transportrichtung des Förderband geneigten Richtung ausrückbar ist.

Diese Lösung ist vorteilhaft, da die zu verschiebenden Gebinde gegenüber dem Förderband nur in eine Richtung bewegt werden, wodurch die Gefahr des Umstürzens einzelner Gebinde reduziert wird. Ferner kann das Förderband durch die Synchronisation der Geschwindigkeit der Transporteinrichtung mit dem Förderband in einer konstanten Geschwindigkeit betrieben werden, wodurch ein hoher Durchsatz erzielt wird und die Gefahr des Umstürzens von Dosen durch Beschleunigungskräfte (positive oder negative) reduziert wird.

Weitere bevorzugte Ausführungsformen sind Gegenstand der nachfolgenden Beschreibungsteile oder der Unteransprüche.

Gemäß einer bevorzugten Ausführungsform der vorliegenden Erfindung ist mittels des Förderbands mindestens eine Reihe an Gebinden auf einem Haupttransportpfad der Identifikationseinrichtung zuführbar, wobei die Identifikationseinrichtung mindestens eine Kameraeinrichtung zum optischen Erfassen des Dekors der Gebinde aufweist, wobei mittels einer Auswerteeinrichtung bestimmt wird, ob das konkret erfasste Dekor zu einer ersten Klasse an Gebinden oder zu einer zweiten Klasse an Gebinden gehört, wobei die Gebinden der ersten Klasse mit dem Förderband auf dem Haupttransportpfad an der Selektiereinrichtung vorbeibewegt werden und die Gebinden der zweite Klasse von der Selektiereinrichtung vom Hauptpfad auf einen Nebenpfad gefördert werden, wobei mittels der Selektierdaten eine Zuordnung der Position des jeweiligen vom Hauptpfad auf den Nebenpfad zu überführenden Gebindes und der Position eines konkreten Ausrückmittels erzeugbar ist. Diese Ausführungsform ist vorteilhaft, da eine eindeutige Zuordnung zwischen konkretem Gebinde und konkretem Ausrückmittel geschaffen wird, wodurch eine individualisierte Bewegung des konkreten Ausrückmittels mittels der Transporteinrichtung bewirkbar ist.

Das Förderband fördert gemäß einer weiteren bevorzugten Ausführungsform der vorliegenden Erfindung die Gebinde mit einer Geschwindigkeit von mindestens 2m/s, insbesondere von mindestens 3m/s oder von mindestens 3,5m/s oder von mindestens oder genau 4m/s, oder mit einer Geschwindigkeit zwischen 2m/s und 10m/s, insbesondere zwischen 3m/s und 5m/s. Bevorzugt werden die Gebinde mit einer Geschwindigkeit von 4m/s gefördert. Diese Ausführungsform ist vorteilhaft, da sehr viele Gebinde innerhalb kurzer Zeit transportiert werden können.

Die Ausrückmittel sind gemäß einer weiteren bevorzugten Ausführungsform der vorliegenden Erfindung mittels Magnetkupplungen mit der Transporteinrichtung koppelbar. Diese Ausführungsform ist vorteilhaft, da Magnetkupplungen sehr schnell und präzise ansteuerbar sind, wodurch ein hoher Gesamtdurchsatz ermöglicht wird.

Jedes Ausrückmittel ist gemäß einer weiteren bevorzugten Ausführungsform der vorliegenden Erfindung mittels jeweils mindestens einem Aktuator in einer geneigt zur Transportrichtung des Förderbands orientierten Richtung verschiebbar, wobei der Aktuator Bestandteil der Selektiereinrichtung ist und zusammen mit dem Ausrückmittel entlang der Endlosbahn bewegbar ist. Der Aktuator kann hierbei eine elektrisch oder pneumatisch oder hydraulisch ausfahrbare Einrichtung, insbesondere entsprechend einer Hubeinrichtung, sein.

Eine Unterdruckeinrichtung ist gemäß einer weiteren bevorzugten Ausführungsform zum Ansaugen der einzelnen Gebinde an das Förderband vorgesehen, wobei die einzelnen Gebinde mittels des Unterdrucks zumindest abschnittsweise entlang des Haupttransportpfades und bevorzugt zumindest abschnittsweise entlang des Nebentransportpfades an das Förderband ansaugbar sind. Diese Ausführungsform ist vorteilhaft, da durch das Ansaugen der Gebinde an das Förderband die Gefahr des Umstürzens einer oder mehrere Dosen reduziert wird, wodurch eine hohe Fördergeschwindigkeit und ein kurviger Förderbandverlauf möglich ist.

Jedes Ausrückmittel weist gemäß einer weiteren bevorzugten Ausführungsform der vorliegenden Erfindung mindestens ein Haltemittel, insbesondere ein Ansaugmittel, zum stabilen Verschieben des jeweiligen Gebindes auf. Diese Ausführungsform ist vorteilhaft, da beim Inkontaktbringen und/oder Verfahren des konkreten Gebindes mittels des Auslenkmittels die Gefahr des Umstürzens des Gebindes reduziert wird, insbesondere wenn eine eventuelle pneumatische Ansaugwirkung auf den Boden des Gebindes aufgehoben oder reduziert wird.

Der Haupttransportpfad und der Nebentransportpfad verlaufen gemäß einer weiteren bevorzugten Ausführungsform der vorliegenden Erfindung zumindest abschnittsweise auf demselben Förderband. Diese Ausführungsform ist vorteilhaft, da die Gebinde nicht über Schnittstellen (bzw. seitlichen Enden von zwei Förderbändern) zwischen zwei Förderbändern geleitet werden müssen und dadurch die Gefahr des Umstürzens der Gebinde reduziert wird.

Jedes Gebinde ist gemäß einer weiteren bevorzugten Ausführungsform der vorliegenden Erfindung eine Getränkedose oder Getränkeflasche. Die Getränkedose oder Getränkeflasche ist beim Transport auf dem Förderband, insbesondere im Bereich der Identifikationseinrichtung bzw. vor der Identifikationseinrichtung und unmittelbar nach der Identifikationseinrichtung, ausschließlich mit Luft gefüllt.

Weiterhin wird die zuvor genannte Aufgabe ebenfalls durch ein Verfahren zum Sortieren von Gebinden, insbesondere Getränkebehältern, gemäss unabhängigem Anspruch 10 gelöst. Das erfindungsgemäße Verfahren umfasst dabei bevorzugt mindestens die Schritte: Transportieren von einer Vielzahl an Gebindeeinheiten auf einem Förderband, Identifizieren eines Dekors auf jeder auf dem Förderband geförderten Gebindeeinheit mittels einer Identifikationseinrichtung, wobei durch die Identifikationseinrichtung Selektierdaten in Abhängigkeit von den jeweils auf einem konkret erfassten Gebinde vorhandenen Dekors erzeugt werden, Umpositionieren individueller Gebindeeinheiten auf dem Förderband in Abhängigkeit von dem jeweils identifizierten Dekor mittels einer Selektiereinrichtung, wobei die Selektiereinrichtung eine Endlosbahn ausbildet und Ausrückmittel zum Verschieben der identifizierten Gebindeeinheiten aufweist, wobei sich die Endlosbahn in einem Selektierbereich entlang des Förderbandes erstreckt, wobei die individuellen Ausrückmittel in dem Selektierbereich mittels einer Transporteinrichtung auf dieselbe Geschwindigkeit wie das Förderband beschleunig werden und dabei eine konkrete und zuvor identifizierte Gebindeeinheit benachbarn, wobei die Ansteuerung der Transporteinheit in Abhängigkeit von den Selektierdaten erfolgt, Ausrücken des jeweiligen Ausrückmittels zum Verschieben der benachbarten Gebindeeinheit in einer zur Transportrichtung des Förderband geneigten Richtung.

Die vorliegende Anmeldung kann sich ferner auf eine Anlage zur Fertigung und/oder zur Abfüllung von Dosen, insbesondere Getränkedosen, beziehen, wobei diese Anlage zumindest eine Vorrichtung gemäß einem der Ansprüche 1 bis 9 umfasst.

Die Verwendung der Wörter "im Wesentlichen" definiert bevorzugt in allen Fällen, in denen diese Wörter im Rahmen der vorliegenden Erfindung verwendet werden eine Abweichung im Bereich von 1%-30%, insbesondere von 1%-20%, insbesondere von 1%-10%, insbesondere von 1%-5%, insbesondere von 1%-2%, von der Festlegung, die ohne die Verwendung dieser Wörter gegeben wäre. Einzelne oder alle Darstellungen der im Nachfolgenden beschriebenen Figuren sind bevorzugt als Konstruktionszeichnungen anzusehen, d.h. die sich aus der bzw. den Figuren ergebenden Abmessungen, Proportionen, Funktionszusammenhänge und/oder Anordnungen entsprechen bevorzugt genau oder bevorzugt im Wesentlichen denen der erfindungsgemäßen Vorrichtung. Weitere Vorteile, Ziele und Eigenschaften vorliegender Erfindung werden anhand nachfolgender Beschreibung anliegender Zeichnungen erläutert, in welchen beispielhaft erfindungsgemäße Vorrichtungen dargestellt sind. Elemente der erfindungsgemäßen Vorrichtungen und Verfahren, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente nicht in allen Figuren beziffert oder erläutert sein müssen. Nachfolgend wird die Erfindung rein beispielhaft anhand der beigefügten Figuren beschrieben.

Darin zeigt beispielhaft:

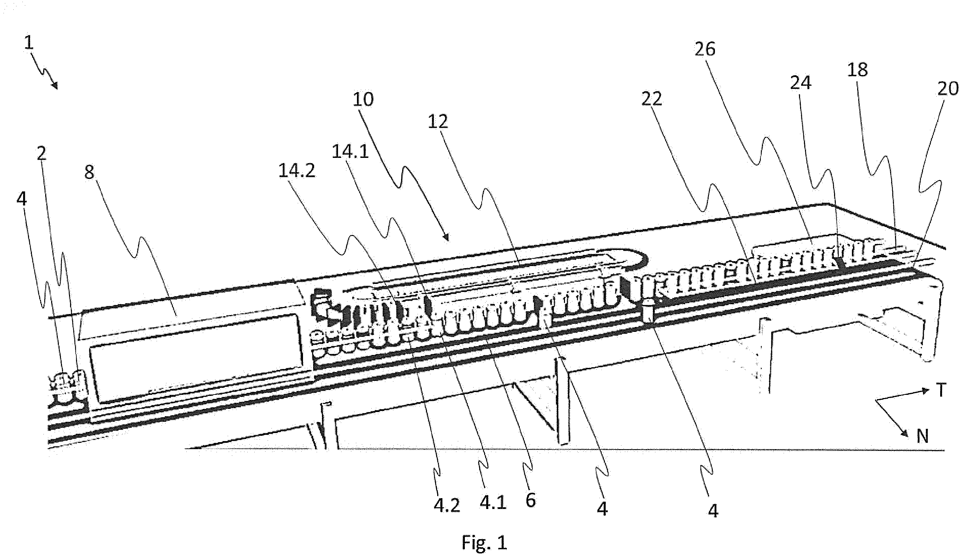

- Fig. 1-6: schematisch das Sortieren von Getränkebehältern mittels der erfindungsgemäßen Vorrichtung, wobei die Umpositionierung der Gebinde anhand zweier Gebinde exemplarisch dargestellt wird.

Fig. 1 zeigt einen ersten exemplarischen Zustand während eines Verfahrens zum Sortieren von Gebinden mit der erfindungsgemäßen Vorrichtung 1. Von der Identifikationseinrichtung 8 werden kontinuierlich optisch Eigenschaften der Gebinde 2, 4 erfasst und von einer Auswerteeinrichtung ausgewertet. Die erfasste Eigenschaft ist bevorzugt das Dekor des jeweiligen Gebindes 2, 4. Bevorzugt handelt es sich bei den Gebinden 2, 4 um Flaschen oder Dosen, insbesondere zur Aufnahme von Getränken.

Die Identifikationseinrichtung 8, insbesondere die Auswerteeinrichtung, erzeugt Daten zum Ansteuern der Transporteinrichtung 10. Damit entlang der Endlosbahn 12 Ausrückmittel 14 derart bewegt werden, dass Sie sich zumindest in Transportrichtung T mit derselben Geschwindigkeit bewegen, wie die auf dem Förderband 6 transportierten Gebinde 2, 4. Die Vorrichtung 1 bildet bevorzugt eine Weiche 22 aus, durch die die Transportpfade abschnittsweise voneinander getrennt werden.

Weiterhin kann im Verlauf des Haupttransportpfades und/oder im Verlauf des Nebentransportpfades eine oder jeweils eine Separiereinrichtung 24 angeordnet sein. Die Separiereinrichtung weist bevorzugt ein Mittel zum Verschieben oder Umpositionieren der Gebinde auf. Das Mittel zum Verschieben oder Umpositionieren ist hierbei bevorzugt eine Drucklufteinrichtung oder ein mechanisches Element, wie z.B. ein Schieber. Durch diese Separiereinrichtung 24 werden Gebinde, die auf einem der Transportpfade gefördert werden, von dem Transportpfad entfernt. Bevorzugt werden die mittels der Separiereinrichtung 24 separierten Gebinde 2a einer Aufnahmeeinrichtung 26 oder einem weiteren Transportpfad zugeführt.

Ferner zeigt Fig. 1, dass das Ausrückmittel 14.1 bereits bewegt wurde und das Gebinde 4.1 benachbart. Auch das Ausrückmittel 14.2 benachbart bereits das Gebinde 4.2. Zwischen den beiden Gebinden 4.1 und 4.2 ist rein exemplarisch ein weiteres Gebinde 2 angeordnet, das nicht umpositioniert wird. Es kann jedoch ebenfalls sein, dass mehrere Gebinde 4 unmittelbar hintereinander auf dem Förderband 6 angeordnet sind. Ferner ist denkbar, dass zwischen zwei Gebinden 4 eine Vielzahl, insbesondere genau oder mehr als zwei Gebinde 2, angeordnet sind.

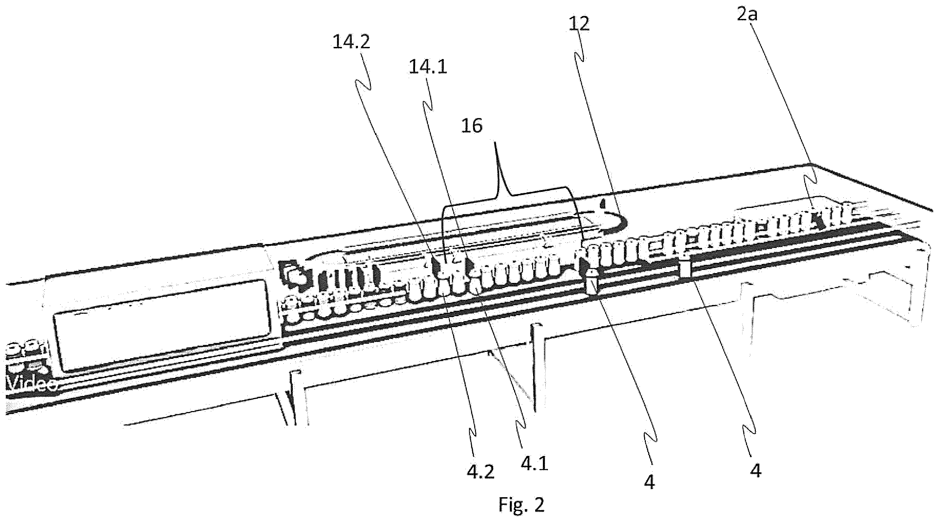

Fig. 2 zeigt, dass das Ausrückmittel 14.1 bereits geneigt zur Transportrichtung T, insbesondere orthogonal dazu, ausgelenkt wurde und dadurch mit dem Gebinde 4.1 in Kontakt gekommen ist, wodurch dieses ebenfalls ausgelenkt wird. Das Gebinde 4.2 wird gemäß dieser Darstellung noch nicht verschoben. Bevorzugt erfolgt das Auslenken der Ausrückmittel 14 in Richtung N ausschließlich in dem Selektierbereich 16.

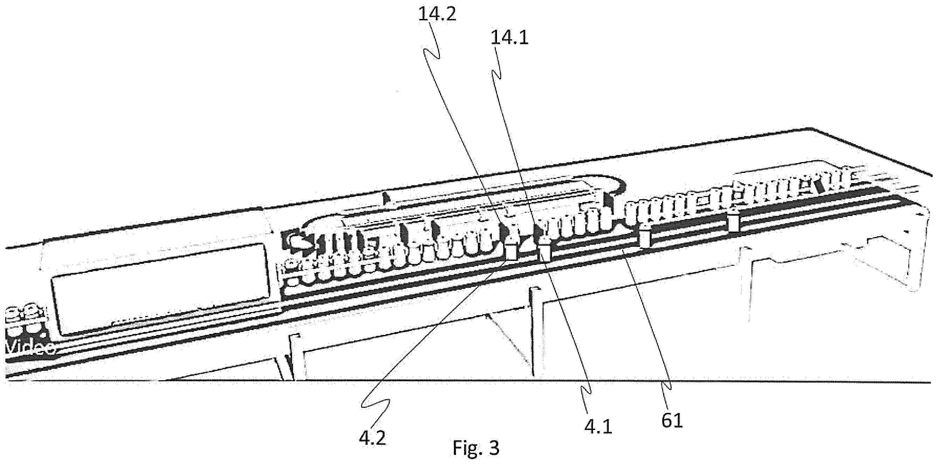

Fig. 3 zeigt, dass beide Ausrückmittel 14.1 und 14.2 die jeweiligen Gebinde 4.1 und 4.2 in Richtung quer zur Förderrichtung des Förderbandes 6 bewegen. Bevorzugt bewegen die Ausrückmittel 14 die Gebinde von einem ersten Förderband 6 auf ein zweites Förderband 61. Das erste Förderband 6 fördert dabei bevorzugt entlang des Haupttransportpfades 18 und das zweite Förderband 61 fördert bevorzugt entlang des Nebentransportpfades 20. Bevorzugt fördern diese Förderbänder stets, insbesondere im Selektierbereich 16, mit derselben Geschwindigkeit. Die Ausrückbewegung der Ausrückmittel 14 wird bevorzugt mittels Aktuatoren bewirkt. Bevorzugt weist jedes Ausrückmittel 14 einen solchen Aktuator, insbesondere ein Hubelement bzw. Verschiebeelement, auf.

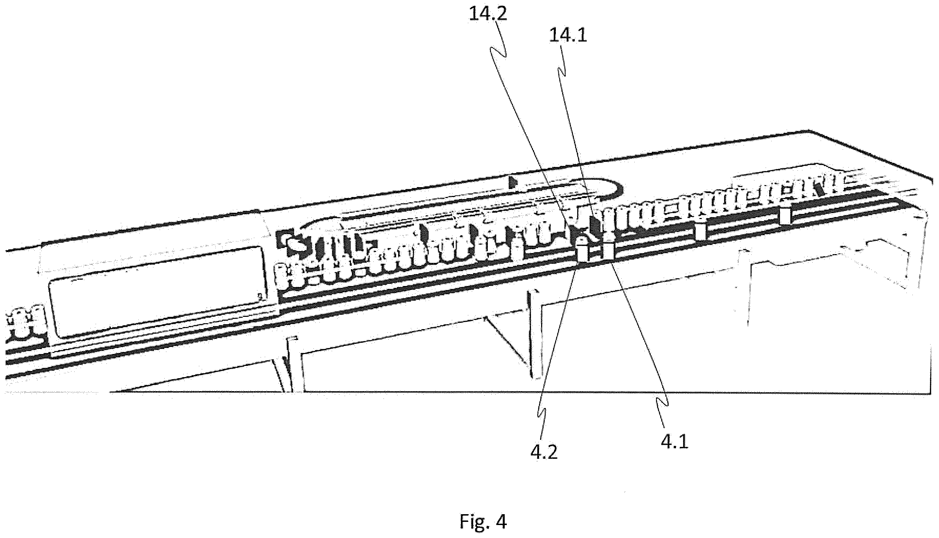

Fig. 4 zeigt, dass das Gebinde 4.1 auf den Nebentransportpfad 20 gefördert wurde und das Ausrückelement 14.1 beabstandet zu dem Gebinde 4.1 ist. Das Ausrückelement 14.1 fährt somit wieder zurück. Das zweite Gebinde 4.2 ist gemäß dieser Darstellung ebenfalls bereits auf dem Nebentransportpfad 20 angekommen, daher bewegt sich auch das zweite Ausrückmittel 14.2 wieder zurück in die Ausgangsposition.

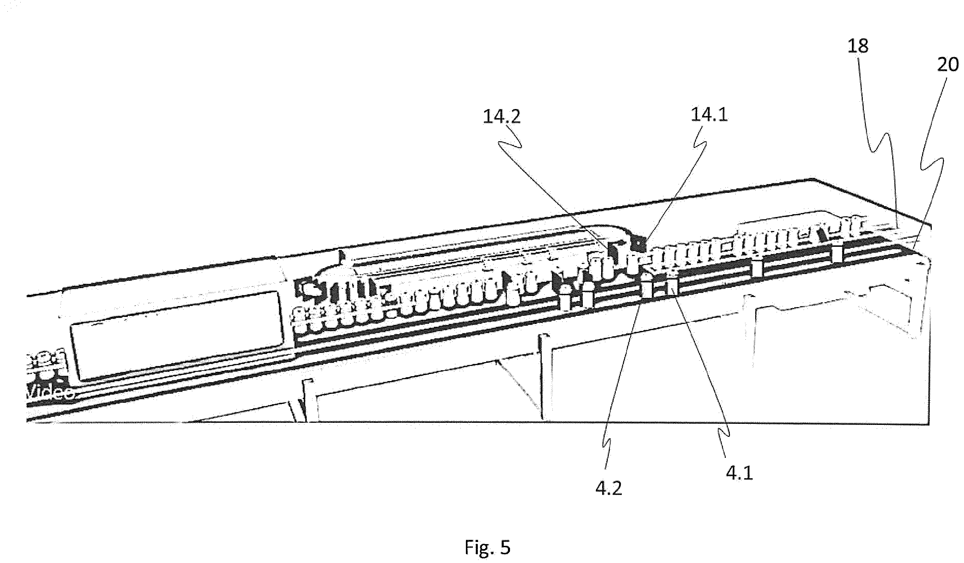

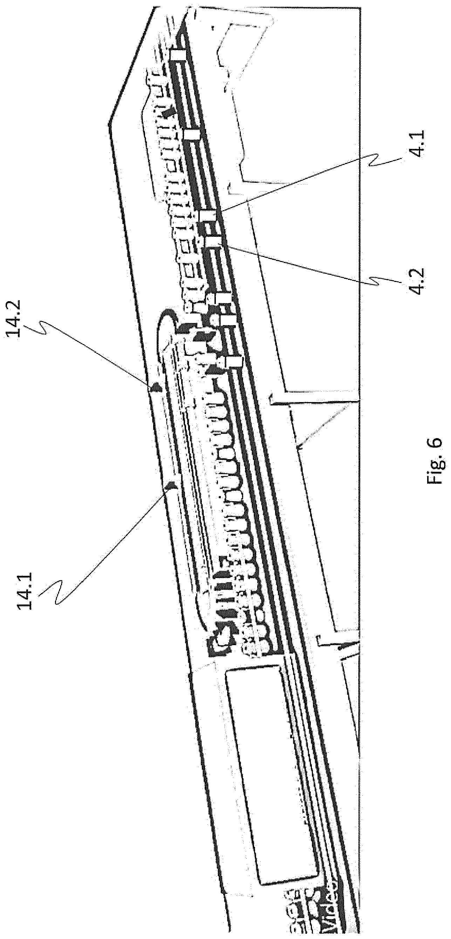

Fig. 5 und 6 zeigen, dass die Gebinde 4.1 und 4.2 unabhängig von den Ausrückmitteln 14.1 und 14.2 bewegt werden. Die Ausrückmittel 14.1 und 14.2 sind zudem wieder in der Ausgangskonfiguration, d.h. nicht ausgerückt und werden über die Endlosbahn 12 zur weiteren Verwendung zurück in die Ausgangsposition bewegt bzw. bewegen sich entlang der Endlosbahn 12 zur weiteren Verwendung zurück in die Ausgangsposition.

Die vorliegende Erfindung bezieht sich somit bevorzugt auf eine Sortiervorrichtung 1 zum Sortieren von Gebinden 2, 4, insbesondere Getränkebehältern. Diese Vorrichtung 1 umfasst dabei bevorzugt ein Förderband 6 zum Transportieren von einer Vielzahl an Gebindeeinheiten 2, 4, eine Identifikationseinrichtung 8 zum Identifizieren eines Dekors auf jeder auf dem Förderband geförderten Gebindeeinheit 2, 4, wobei durch die Identifikationseinrichtung 8 Selektierdaten in Abhängigkeit von den jeweils auf einem konkret erfassten Gebinde 4 vorhandenen Dekors erzeugbar sind, eine Selektiereinrichtung 10 zum Umpositionieren individueller Gebindeeinheiten 4 auf dem Förderband 6 in Abhängigkeit von dem jeweils identifizierten Dekor, wobei die Selektiereinrichtung 10 eine Endlosbahn 12 ausbildet und Ausrückmittel 14 zum Verschieben der identifizierten Gebindeeinheiten 4 aufweist, wobei sich die Endlosbahn 12 in einem Selektierbereich 16 entlang des Förderbandes 6 erstreckt, wobei die individuellen Ausrückmittel 14 in dem Selektierbereich 16 mittels einer Transporteinrichtung auf dieselbe Geschwindigkeit wie das Förderband 6 beschleunigbar sind und dabei eine konkrete und zuvor identifizierte Gebindeeinheit 4 benachbart, wobei die Ansteuerung der Transporteinheit in Abhängigkeit von den Selektierdaten erfolgt, wobei das jeweilige Ausrückmittel 14 zum Verschieben der benachbarten Gebindeeinheit 4 in einer zur Transportrichtung T des Förderbands 6 geneigten Richtung N ausrückbar ist.

Diese Erfindung ist vorteilhaft, da z.B. baugleiche Getränkebehälter, wie Dosen oder Flaschen, bis kurz vor der Fertigstellung, insbesondere Befüllung oder Leerverpackung, mit unterschiedlichen Dekors versehen sein können und gemeinsam über denselben Behandlungspfad geführt werden können, insbesondere wenn unterschiedliche Vorrichtungen zur Dekoraufbringung verwendet werden. Es kann somit eine erhebliche Komplexitätsreduzierung bewirkt werden, da der Behandlungspfad in der Anlage nicht abwechselnd für den einen oder den anderen Gebindetyp verwendet werden muss. Somit können auch alle Gebinde zeitgleich gefördert werden, wodurch der Gesamtdurchfluss der Anlage erhöht wird, wobei ein Leerlaufen der Anlage auch bei einem Wechsel einzelner Vorrichtungen zur Dekoraufbringung nicht erforderlich ist.

### Bezugszeichenliste

- 1: Vorrichtung
- 2: erste Gebindeart
- 2a: separiertes Gebinde der ersten Gebindeart
- 4: zweite Gebindeart
- 4.1: erstes exemplarisches Gebinde der zweiten Gebindeart
- 4.2: zweites exemplarisches Gebinde der zweiten Gebindeart
- 6: Förderband
- 8: Identifikationseinrichtung
- 10: Selektiereinrichtung
- 12: Endlosbahn
- 14: Ausrückmittel
- 14.1: erstes exemplarisches Ausrückmittel
- 14.2: zweites exemplarisches Ausrückmittel
- 16: Selektierbereich
- 18: Haupttransportpfad
- 20: Nebentransportpfad
- 22: Weiche
- 24: Separiereinrichtung
- 26: Aufnahmeeinrichtung
- 61: zweites Förderband

- N: geneigte Richtung
- T: Transportrichtung

## Patentansprüche

1. Vorrichtung (1) zum Sortieren von Gebinden (2, 4), insbesondere von Dosen und Flaschen als Getränkebehälter,
mindestens umfassend
ein Förderband (6) zum Transportieren von einer Vielzahl an Gebindeeinheiten (2, 4),
eine Identifikationseinrichtung (8) zum Identifizieren eines Dekors auf jeder auf dem Förderband geförderten Gebindeeinheit (2, 4), wobei durch die Identifikationseinrichtung (8) Selektierdaten in Abhängigkeit von den jeweils auf einem konkret erfassten Gebinde (4) vorhandenen Dekors erzeugbar sind,
eine Selektiereinrichtung (10) zum Umpositionieren individueller Gebindeeinheiten (4) auf dem Förderband (6) in Abhängigkeit von dem jeweils identifizierten Dekor,
wobei die Selektiereinrichtung (10) eine Endlosbahn (12) ausbildet und Ausrückmittel (14) zum Verschieben der identifizierten Gebindeeinheiten (4) aufweist, wobei sich die Endlosbahn (12) in einem Selektierbereich (16) entlang des Förderbandes (6) erstreckt, wobei die individuellen Ausrückmittel (14) in dem Selektierbereich (16) mittels einer Transporteinrichtung auf dieselbe Geschwindigkeit wie das Förderband (6) beschleunigbar sind und dabei einer konkreten und zuvor identifizierten Gebindeeinheit (4) zugeordnet werden, wobei die Ansteuerung der Transporteinheit in Abhängigkeit von den Selektierdaten erfolgt
**dadurch gekennzeichnet, dass**
das jeweilige Ausrückmittel (14) zum Verschieben der benachbarten Gebindeeinheit (4) in einer zur Transportrichtung (T) des Förderbands (6) geneigten Richtung (N) ausrückbar ist.

2. Vorrichtung nach Anspruch 1,
**dadurch gekennzeichnet, dass**
mittels des Förderbands (6) mindestens eine Reihe an Gebinden (2, 4) auf einem Haupttransportpfad (18) der Identifikationseinrichtung (8) zuführbar ist,
wobei die Identifikationseinrichtung (8) mindestens eine Kameraeinrichtung zum optischen Erfassen des Dekors der Gebinde (2, 4) aufweist,
wobei mittels einer Auswerteeinrichtung bestimmt wird, ob das konkret erfasste Dekor zu einer ersten Klasse an Gebinden (2) oder zu einer zweiten Klasse (4) an Gebinden gehört,
wobei die Gebinde (2) der ersten Klasse mit dem Förderband (6) auf dem Haupttransportpfad (18) an der Selektiereinrichtung (10) vorbeibewegt werden und die Gebinden (4) der zweite Klasse von der Selektiereinrichtung (10) vom Haupttransportpfad (18) auf einen Nebentransportpfad (20) gefördert werden,
wobei mittels der Selektierdaten eine Zuordnung der Position des jeweiligen vom Haupttransportpfad (18) auf den Nebentransportpfad (20) zu überführenden Gebindes (4) und der Position eines konkreten Ausrückmittels (14) erzeugbar ist.

3. Vorrichtung nach einem der vorangegangenen Ansprüche 1 oder 2,
**dadurch gekennzeichnet, dass**
das Förderband (6) die Gebinde (2, 4) mit einer Geschwindigkeit von mindestens 2m/s, insbesondere von mindestens 3m/s oder von mindestens 3,5m/s oder von mindestens oder genau 4m/s, oder mit einer Geschwindigkeit zwischen 2m/s und 10m/s, insbesondere zwischen 3m/s und 5m/s, fördert.

4. Vorrichtung nach einem der vorangegangenen Ansprüche,
**dadurch gekennzeichnet, dass**
die Ausrückmittel (14) mittels Magnetkupplungen mit der Transporteinrichtung koppelbar sind.

5. Vorrichtung nach einem der vorangegangenen Ansprüche,
**dadurch gekennzeichnet, dass**
jedes Ausrückmittel (14) mittels jeweils mindestens einem Aktuator in einer geneigt zur Transportrichtung des Förderbands (6) orientierten Richtung verschiebbar ist,
wobei der Aktuator Bestandteil der Selektiereinrichtung (10) ist und zusammen mit dem Ausrückmittel (14) entlang der Endlosbahn (12) bewegbar ist.

6. Vorrichtung nach einem der vorangegangenen Ansprüche,
**dadurch gekennzeichnet, dass**
eine Unterdruckeinrichtung zum Ansaugen der einzelnen Gebinde (2, 4) an das Förderband (6) vorgesehen ist, wobei die einzelnen Gebinde mittels des Unterdrucks zumindest abschnittsweise entlang des Haupttransportpfades (18) und bevorzugt zumindest abschnittsweise entlang des Nebentransportpfades (20) an das Förderband (6) ansaugbar sind.

7. Vorrichtung nach einem der vorangegangenen Ansprüche,
**dadurch gekennzeichnet, dass**
jedes Ausrückmittel (14) mindestens ein Haltemittel, insbesondere ein Ansaugmittel, zum stabilen Verschieben des jeweiligen Gebindes (4) aufweist.

8. Vorrichtung nach einem der vorangegangenen Ansprüche,
**dadurch gekennzeichnet, dass**
der Haupttransportpfad (18) und der Nebentransportpfad (20) zumindest abschnittsweise auf demselben Förderband (6) verlaufen.

9. Vorrichtung nach einem der vorangegangenen Ansprüche,
**dadurch gekennzeichnet, dass**
jedes Gebinde (2, 4) eine Getränkedose oder Getränkeflasche ist, wobei die Getränkedose oder Getränkeflasche beim Transport auf dem Förderband (6) ausschließlich mit Luft gefüllt ist.

10. Verfahren zum Sortieren von Gebinden, insbesondere Getränkebehältern, mindestens umfassend die Schritte:
Transportieren von einer Vielzahl an Gebindeeinheiten (2, 4) auf einem Förderband (6),
Identifizieren eines Dekors auf jeder auf dem Förderband (6) geförderten Gebindeeinheit (2, 4) mittels einer Identifikationseinrichtung (8), wobei durch die Identifikationseinrichtung (8) Selektierdaten in Abhängigkeit von den jeweils auf einem konkret erfassten Gebinde (2, 4) vorhandenen Dekors erzeugt werden,
Umpositionieren individueller Gebindeeinheiten (2, 4) auf dem Förderband in Abhängigkeit von dem jeweils identifizierten Dekor mittels einer Selektiereinrichtung (10),
wobei die Selektiereinrichtung (10) eine Endlosbahn (12) ausbildet und Ausrückmittel (14) zum Verschieben der identifizierten Gebindeeinheiten (4) aufweist, wobei sich die Endlosbahn (12) in einem Selektierbereich (16) entlang des Förderbandes (6) erstreckt, wobei die individuellen Ausrückmittel (14) in dem Selektierbereich (10) mittels einer Transporteinrichtung auf dieselbe Geschwindigkeit wie das Förderband (6) beschleunigt werden und dabei eine konkrete und zuvor identifizierte Gebindeeinheit (4) benachbarn, wobei die Ansteuerung der Transporteinheit in Abhängigkeit von den Selektierdaten erfolgt,
Ausrücken des jeweiligen Ausrückmittels (14) zum Verschieben der benachbarten Gebindeeinheit (4) in einer zur Transportrichtung des Förderbands (6) geneigten, insbesondere orthogonalen, Richtung (N).

## Claims

1. Device (1) for sorting containers (2, 4), in particular cans and bottles as beverage containers,
at least comprising
a conveyor belt (6) for transporting a plurality of container units (2, 4),
an identification device (8) for identifying a decoration on each container unit (2, 4) conveyed on the conveyor belt, it being possible for selection data to be generated by the identification device (8) as a function of the respective decorations present on a specifically detected container (4),
a selecting device (10) for repositioning individual pack units (4) on the conveyor belt (6) as a function of the respectively identified decoration,
the selecting device (10) forming an endless track (12) and having disengaging means (14) for displacing the identified pack units (4), the endless track (12) extending in a selecting region (16) along the conveyor belt (6), wherein the individual disengaging means (14) in the selecting area (16) can be accelerated to the same speed as the conveyor belt (6) by means of a transport device and are thereby assigned to a concrete and previously identified pack unit (4), the control of the transport unit being effected in dependence on the selecting data
**characterized in that**
the respective disengaging means (14) can be disengaged for displacing the adjacent pack unit (4) in a direction (N) inclined to the transport direction (T) of the conveyor belt (6).

2. Device according to claim 1,
**characterized in that**
by means of the conveyor belt (6) at least one row of packs (2, 4) can be fed on a main transport path (18) to the identification device (8),
wherein the identification device (8) has at least one camera device for optically detecting the decoration of the packs (2, 4),
wherein it is determined by means of an evaluation device whether the specifically detected decoration belongs to a first class of containers (2) or to a second class (4) of containers,
wherein the packs (2) of the first class are moved past the selecting device (10) by the conveyor belt (6) on the main transport path (18) and the packs (4) of the second class are conveyed by the selecting device (10) from the main transport path (18) onto a secondary transport path (20),
wherein an assignment of the position of the respective container (4) to be transferred from the main transport path (18) to the secondary transport path (20) and the position of a specific disengaging means (14) can be generated by means of the selection data.

3. Device according to one of the preceding claims 1 or 2,
**characterized in that**
the conveyor belt (6) conveys the packs (2, 4) at a speed of at least 2m/s, in particular of at least 3m/s or of at least 3.5m/s or of at least or exactly 4m/s, or at a speed between 2m/s and 10m/s, in particular between 3m/s and 5m/s.

4. Device according to any of the preceding claims,
**characterized in that**
the disengaging means (14) can be coupled to the transport device by means of magnetic couplings.

5. Device according to one of the preceding claims,
**characterized in that**
each disengaging means (14) is displaceable by means of at least one actuator in each case in a direction inclined to the transport direction of the conveyor belt (6),
wherein the actuator is a component of the selecting device (10) and is movable together with the disengaging means (14) along the endless track (12).

6. Device according to any of the preceding claims,
**characterized in that**
a vacuum device is provided for sucking the individual packs (2, 4) onto the conveyor belt (6), wherein the individual packs can be sucked onto the conveyor belt (6) by means of the vacuum at least in sections along the main transport path (18) and preferably at least in sections along the secondary transport path (20).

7. Device according to one of the preceding claims,
**characterized in that**
each disengaging means (14) has at least one holding means, in particular a suction means, for stably displacing the respective container (4).

8. Device according to any of the preceding claims,
**characterized in that**
the main transport path (18) and the secondary transport path (20) run at least in sections on the same conveyor belt (6).

9. Device according to any one of the preceding claims,
**characterized in that**
each container (2, 4) is a beverage can or beverage bottle, the beverage can or beverage bottle being filled exclusively with air during transport on the conveyor belt (6).

10. Method for sorting containers, in particular beverage containers,
at least comprising the steps of:
Transporting a plurality of container units (2, 4) on a conveyor belt (6),
identifying a decoration on each container unit (2, 4) conveyed on the conveyor belt (6) by means of an identification device (8), the identification device (8) generating selection data as a function of the respective decorations present on a specifically detected container (2, 4),
repositioning of individual pack units (2, 4) on the conveyor belt as a function of the respectively identified decoration by means of a selecting device (10),
the selecting device (10) forming an endless track (12) and having disengaging means (14) for displacing the identified pack units (4), the endless track (12) extending in a selecting region (16) along the conveyor belt (6), wherein the individual disengaging means (14) are accelerated in the selecting area (10) by means of a transport device to the same speed as the conveyor belt (6) and thereby adjacent to a concrete and previously identified pack unit (4), the control of the transport unit being effected in dependence on the selecting data,
disengaging the respective disengaging means (14) for displacing the adjacent pack unit (4) in a direction (N) inclined to the transport direction of the conveyor belt (6), in particular orthogonally.

## Revendications

1. Dispositif (1) pour trier des récipients (2, 4), en particulier des canettes et des bouteilles comme récipients de boisson,
comprenant au moins
une bande transporteuse (6) pour transporter une pluralité d'unités de conteneurs (2, 4),
un dispositif d'identification (8) pour identifier une décoration sur chaque unité de récipient (2, 4) transportée sur la bande transporteuse, des données de sélection pouvant être générées par le dispositif d'identification (8) en fonction des décorations respectives présentes sur un récipient (4) concrètement détecté, et
un dispositif de sélection (10) pour repositionner des unités d'emballage individuelles (4) sur la bande transporteuse (6) en fonction de la décoration respectivement identifiée,
le dispositif de sélection (10) formant une piste sans fin (12) et ayant des moyens de désengagement (14) pour déplacer les unités d'emballage identifiées (4), la piste sans fin (12) s'étendant dans une région de sélection (16) le long de la bande transporteuse (6), dans lequel les moyens de débrayage individuels (14) dans la zone de sélection (16) peuvent être accélérés à la même vitesse que la bande transporteuse (6) au moyen d'un dispositif de transport et sont ainsi affectés à une unité d'emballage (4) spécifique et préalablement identifiée, l'unité de transport étant commandée en fonction des données de sélection
**caractérisé en ce que**
les moyens de désengagement respectifs (14) peuvent être désengagés pour déplacer l'unité d'emballage adjacente (4) dans une direction (N) inclinée par rapport à la direction de transport (T) de la bande transporteuse (6).

2. Dispositif selon la revendication 1,
**caractérisé en ce que**
au moins une rangée de paquets (2, 4) peut être amenée au dispositif d'identification (8) sur un chemin de transport principal (18) au moyen de la bande transporteuse (6),
dans lequel le dispositif d'identification (8) a au moins un dispositif de caméra pour détecter optiquement la décoration des emballages (2, 4),
dans lequel il est déterminé au moyen d'un dispositif d'évaluation si la décoration spécifiquement détectée appartient à une première classe de récipients (2) ou à une seconde classe (4) de récipients,
dans lequel les paquets (2) de la première classe sont déplacés devant le dispositif de sélection (10) par la bande transporteuse (6) sur le chemin de transport principal (18) et les paquets (4) de la seconde classe sont transportés par le dispositif de sélection (10) du chemin de transport principal (18) sur un chemin de transport secondaire (20),
dans lequel une affectation de la position du conteneur respectif (4) à transférer du chemin de transport principal (18) au chemin de transport secondaire (20) et de la position d'un moyen de désengagement spécifique (14) peut être générée au moyen des données de sélection.

3. Dispositif selon l'une des revendications précédentes 1 ou 2,
**caractérisé en ce que**
la bande transporteuse (6) transporte les paquets (2, 4) à une vitesse d'au moins 2m/s, en particulier d'au moins 3m/s ou d'au moins 3,5m/s ou d'au moins ou exactement 4m/s, ou à une vitesse comprise entre 2m/s et 10m/s, en particulier entre 3m/s et 5m/s.

4. Dispositif selon l'une quelconque des revendications précédentes,
**caractérisé en ce que**
le moyen de désengagement (14) peut être couplé au dispositif de transport au moyen de couplages magnétiques.

5. Dispositif selon l'une des revendications précédentes,
**caractérisé en ce que**
chaque moyen de débrayage (14) est déplaçable au moyen d'au moins un actionneur dans chaque cas dans une direction inclinée par rapport à la direction de transport de la bande transporteuse (6),
dans lequel l'actionneur fait partie du dispositif de sélection (10) et est mobile avec le moyen de désengagement (14) le long de la piste sans fin (12).

6. Dispositif selon l'une quelconque des revendications précédentes,
**caractérisé en ce que**
un dispositif de vide est prévu pour aspirer les emballages individuels (2, 4) sur la bande transporteuse (6), les emballages individuels pouvant être aspirés sur la bande transporteuse (6) au moyen du vide au moins par sections le long du trajet de transport principal (18) et de préférence au moins par sections le long du trajet de transport secondaire (20).

7. Dispositif selon l'une des revendications précédentes,
**caractérisé en ce que**
chaque moyen de désengagement (14) comprend au moins un moyen de maintien, en particulier un moyen d'aspiration, pour déplacer de manière stable le récipient respectif (4).

8. Dispositif selon l'une des revendications précédentes,
**caractérisé en ce que**
le chemin de transport principal (18) et le chemin de transport secondaire (20) se déplacent au moins en partie sur la même bande transporteuse (6).

9. Dispositif selon l'une des revendications précédentes,
**caractérisé en ce que**
chaque récipient (2, 4) est une boite de boisson ou une bouteille de boisson, la boîte de boisson ou la bouteille de boisson étant remplie exclusivement d'air pendant le transport sur la bande transporteuse (6).

10. Méthode de tri de récipients, en particulier de récipients de boissons,
comprenant au moins les étapes suivantes :
Transport d'une pluralité d'unités de conteneurs (2, 4) sur une bande transporteuse (6),
identifier une décoration sur chaque unité d'emballage (2, 4) transportée sur la bande transporteuse (6) au moyen d'un dispositif d'identification (8), le dispositif d'identification (8) générant des données de sélection en fonction des décorations respectives présentes sur une unité d'emballage (2, 4) spécifiquement détectée,
repositionnement des unités d'emballage individuelles (2, 4) sur la bande transporteuse en fonction de la décoration respectivement identifiée au moyen d'un dispositif de sélection (10),
le dispositif de sélection (10) formant une piste sans fin (12) et ayant des moyens de désengagement (14) pour déplacer les unités d'emballage identifiées (4), la piste sans fin (12) s'étendant dans une région de sélection (16) le long de la bande transporteuse (6), les moyens de débrayage individuels (14) sont accélérés dans la zone de sélection (10) au moyen d'un dispositif de transport à la même vitesse que la bande transporteuse (6) et sont ainsi adjacents à une unité d'emballage (4) spécifique et préalablement identifiée, la commande du dispositif de transport étant effectuée en fonction des données de sélection,
désengager les moyens de désengagement respectifs (14) pour déplacer l'unité d'emballage adjacente (4) dans une direction (N) qui est inclinée par rapport à la direction de transport de la bande transporteuse (6), en particulier orthogonalement.
